# EUROPÄISCHE PATENTANMELDUNG

(11) **EP 0 865 964 A2**
(43) Veröffentlichungstag der Anmeldung: **23.09.1998**
(21) Anmeldenummer: 98104564.4
(22) Anmeldetag: 12.03.1998
(51) Int. Cl.: B60P 1/64, B60P 1/48

(54) **Absetzkipper**

(30) Priorität: 18.03.1997 DE 29704874 U
(71) Anmelder: Gergen, Hans Georg, D-66386 St Ingbert (DE); Gergen, Engelbert, D-66583 Spiesen-Elversberg (DE); Gergen, Ottmar, D-66386 St Ingbert (DE)
(72) Erfinder: Gergen, Hans Georg, D-66386 St Ingbert (DE); Gergen, Engelbert, D-66583 Spiesen-Elversberg (DE); Gergen, Ottmar, D-66386 St Ingbert (DE)
(74) Vertreter: Vièl, Christof, Dipl.-Ing.

(57) **Zusammenfassung**

Die Erfindung betrifft einen Absetzkipper, der zwei im wesentlichen parallel zueinander angeordnete, im hinteren Bereich der Fahrzeug-Ladefläche (2) angelenkte, um zum hinteren Rand der Ladefläche etwa parallel laufende Achsen schwenkbare Arme (1) aufweist, an deren freien Enden Angriffsorgane angeordnet sind, mit denen Angriffspunkte eines Wechselbehälters (3) erfaßbar sind, wobei zum Verschwenken der Arme (2) jeweils ein am Fahrgestell angelenkter Hydraulikzylinder (5) vorgesehen ist.

Für das Aufrichten von Wechselbehältern, insbesondere Silos, auf der Ladefläche von Absetzkippern bekannte Aufrichthilfen sind aufwendig und erfordern neben dem für die Betätigung der Arme erforderlichen Hydraulikanschluß einen weiteren Hydraulikanschluß im Bereich unterhalb des Schwerpunktes des Wechselbehälters.

Im Rahmen der Erfindung wurde ein Absetzkipper geschaffen, der dadurch gekennzeichnet ist, daß daß das andere Ende des Hydraulikzylinders an einem am Fahrgestell angelenkten Trapez (4) angelenkt ist, an dem wiederum der Arm verschwenkbar angelenkt ist und daß zum Verschwenken des Arms ein weiterer Hydraulikzylinder (6) vorgesehen ist, der einerseits an dem Trapez (4) und andererseits an dem Arm (1) angelenkt ist.

## Beschreibung

Die Erfindung betrifft einen Absetzkipper, der zwei im wesentlichen parallel zueinander angeordnete, im hinteren Bereich der Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen Angriffspunkte eines Wechselbehälters erfaßbar sind, wobei zum Verschwenken der Arme jeweils ein am Fahrgestell angelenkter Hydraulikzylinder vorgesehen ist.

Derartige Absetzkipper sind seit langem bekannt. In der DE-B-2 027 259 wird ein derartiger Absetzkipper bereits beschrieben. Für die seinerzeit üblichen Wechselbehälter, insbesondere Kippmulden, war ein derartiger Absetzkipper auch durchaus geeignet. Jedoch werden in zunehmendem Maß Absetzkipper auch zum Einsatz von Silos verwendet, wobei die volle zulässige Breite von 2,50 m und auch die volle Länge der Ladefläche genutzt wird. Im beladenen Zustand können derartige Silos Gewichte von 25 Tonnen und mehr aufweisen, so daß die Silos nur schwer zu handhaben sind. Hinzu kommt, daß aus Kostengründen häufig noch ein Anhänger mit einem oder mehreren weiteren Silos mitgeführt wird und die Silos mit Hilfe der Absetzvorrichtung aufgeladen, abgeladen und aufgestellt werden sollen.

Zum Anheben des Silos aus der liegenden Transportposition wurde das Transportfahrzeug gemäß der DE-U-88 14 887 geschaffen, bei dem eine erste Hydraulikzylindergruppe vorhanden ist, die im Bereich des Schwerpunktes des Vorratsbehälters angreift, um ein Aufrichten des Silos bis zu einer 45 °-Stellung zu ermöglichen. Anschließend übernimmt dann eine zweite Hydraulikzylindergruppe die weitere Aufrichtbewegung.

In gleicher Weise arbeitet auch die Stützeinrichtung, wie sie in der DE-U 94 03 839 beschrieben ist.

Diese zusätzlichen Aufrichthilfen sind aufwendig und erfordern neben dem für die Betätigung der Arme erforderlichen Hydraulikanschluß einen weiteren Hydraulikanschluß im Bereich unterhalb des Schwerpunktes des Wechselbehälters.

Der Erfindung liegt daher die Aufgabe zugrunde, einen Absetzkipper der eingangs beschriebenen Art zu schaffen, mit dem ohne zusätzliche Stützeinrichtung auch schwere Wechselbehälter, wie beladene große Transportsilos, aufgeladen, abgeladen und aufgestellt werden können.

Diese Aufgabe wird erfindungsgemäß dadurch gelöst, daß daß das andere Ende des Hydraulikzylinders an einem am Fahrgestell angelenkten Trapez angelenkt ist, an dem wiederum der Arm verschwenkbar angelenkt ist und daß zum Verschwenken des Arms ein weiterer Hydraulikzylinder vorgesehen ist, der einerseits an dem Trapez und andererseits an dem Arm angelenkt ist.

Eine Ausbildung der Erfindung besteht darin, daß jedes Angriffsorgan als gabelförmige Klaue ausgebildet ist.

Eine andere Ausbildung sieht vor, daß die Arme in der vom hinteren Fahrzeugteil nach vorne erstreckenden Stellung unterhalb der Mittelebene eines auf der Ladefläche befindlichen Wechselbehälters anzuordnen sind.

Es ist vorteilhaft, daß die Arme von einer etwa horizontalen Position über der Ladefläche um mehr als 180 °weg in eine vom Ende der Ladefläche weg nach unten geneigte Stellung verschwenkbar sind.

Zweckmäßig ist auch, daß die Arme des Fahrzeuges synchron oder einzeln längenveränderbar und/oder schwenkbar sind.

Weiterhin ist es sinnvoll, daß die gabelförmigen Klauen im offenen Bereich ein diesen Bereich überbrückendes Verschlußelement aufweisen.

Es liegt im Rahmen der Erfindung, daß vorzugsweise im hinteren Bereich der Ladefläche Stützvorrichtungen vorgesehen sind.

Erfindungsgemäß ist auch, daß mit den Angriffsorganen der Arme Angriffspunkte an einem Silo erfaßbar sind.

Schließlich ist es vorteilhaft, daß das Trapez unterhalb der Ladefläche des Absetzkippers angeordnet ist.

Der erfindungsgemäße Absetzkipper weist eine völlig neue Kinematik im Bereich des Armes auf. Durch die Anlenkung des Armes an dem Trapez, das wiederum am Fahrgestell angelenkt und über den Hydraulikzylinder verschwenkbar ist, kann eine zusätzliche Stützvorrichtung entfallen, da bei der Einleitung der Aufstellbewegung ein ausreichender Hebelarm gegeben ist. Durch den weiteren Hydraulikzylinder kann der Arm direkt verschwenkt werden, insbesondere, wenn der Wechselbehälter bereits weitgehend aufgerichtet ist. Es ist somit möglich, einen Wechselbehälter, und zwar auch einen beladenen großen Silo, auf einem Anhänger abzulegen oder von diesem aufzunehmen.

Im folgenden wird ein Ausführungsbeispiel der Erfindung anhand von Zeichnungen beschrieben. Es zeigen
- Fig. 1: eine Seitenansicht eines erfindungsgemäßen Absetzkippers beim Aufstellen eines Silos,
- Fig. 2: eine Seitenansicht eines erfindungsgemäßen Absetzkippers beim Aufnehmen eines Silos von einem Anhänger, und
- Fig. 3: eine Seitenansicht eines erfindungsgemäßen Absetzkippers mit einem auf der Ladefläche abgelegten Silo.

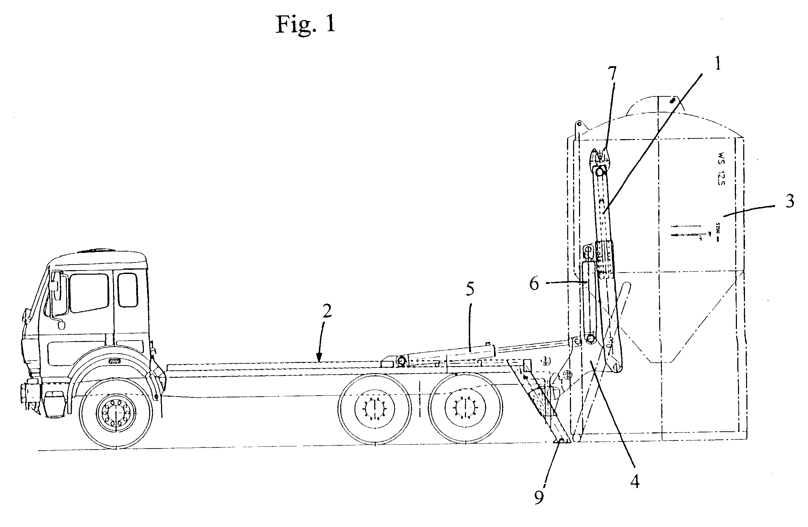

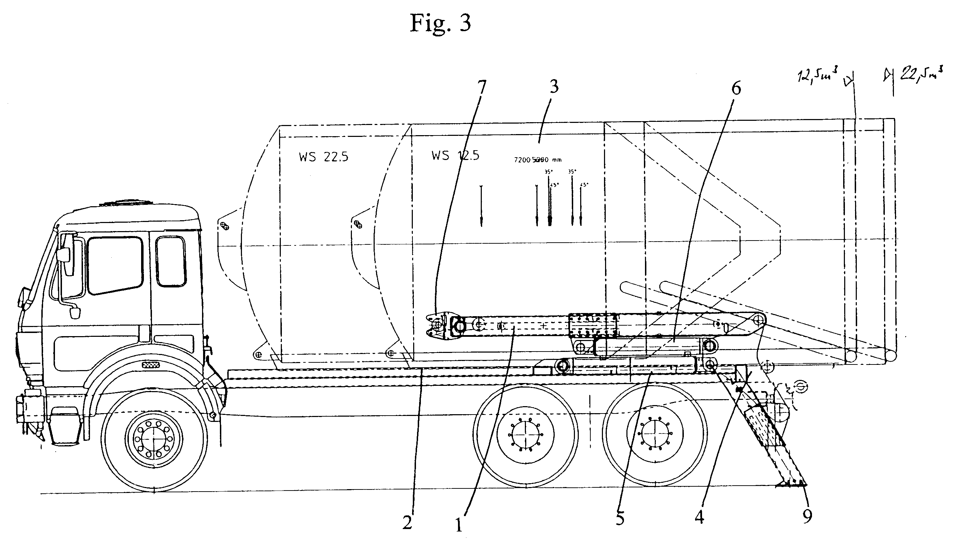

Wie aus den Fig. 1 bis 3 ersichtlich ist, ist die erfindungsgemäße Vorrichtung Bestandteil eines Absetzkippers. Am hinteren Ende der Ladefläche 2 des Absetzkippers sind zwei im wesentlichen parallel zueinander angeordnete Arme 1 zum Verschwenken von Wechselbehältern 3 wie dem hier gezeigten Silo vorgesehen. Am hinteren Bereich der Ladefläche 2, hier etwas unterhalb der Ladefläche 2, ist auf jeder Seite des Fahrzeuges ein Trapez 4 angelenkt, an dem wiederum ein Arm 1 angelenkt ist. Mit der Bezeichnung "Trapez" soll keine Festlegung auf ein trapezförmiges Zwischenstück erfolgen, sondern das Zwischenstück kann beliebige andere Formen aufweisen. Das Verschwenken des Trapezes 4 und des Armes 1 erfolgt über zwei jeweils am Trapez 4 angelenkte Hydraulikzylinder 5, 6, wobei ein Hydraulikzylinder 5 mit seinem anderen Ende am Fahrgestell des Absetzkippers angelenkt ist, im vorliegenden Fall an der Ladefläche 2. Der weitere Hydraulikzylinder 6 ist an dem Arm 1 angelenkt. Durch einzelnes oder gemeinsames Betätigen der beiden Hydraulikzylinder 5, 6 kann der Arm 1 verschwenkt werden und Wechselbehälter 3 abgeladen, aufgenommen oder aufgestellt werden.

Beim Aufstellen eines auf der Ladefläche 2 befindlichen Wechselbehälters 3 wird zunächst der an der Ladefläche 2 angelenkte Hydraulikzylinder 5 betätigt, der aufgrund seines günstigen Hebels den Wechselbehälter 3 aus der horizontalen in die vertikale Lage aufrichten kann. Anschließend erfolgt das weitere Verschwenken des Wechselbehälters 3 überwiegend durch Betätigung des weiteren Hydraulikzylinders 6, wobei jedoch auch eine zusätzliche Betätigung des an der Ladefläche 2 angelenkten Hydraulikzylinders 5, beispielsweise zum Anheben des Wechselbehälters 3 durch Kippen des Trapezes 4, erfolgen kann.

Wie beispielsweise aus Fig. 1 ersichtlich ist, kann durch eine Verlängerung des Teiles des Trapezes 4, an dem der Arm 1 angelenkt ist, auch eine Aufnahme bzw. ein Abstellen von Wechselbehältern 3 mit größerem Abstand vom Absetzkipper als dem bekannten erreicht werden.

Die Arme 1 des Absetzkippers können beim Transport unterhalb der Mittelebene eines auf der Ladefläche befindlichen Wechselbehälters 3 angeordnet werden, was ermöglicht, auch Wechselbehälter mit einer maximalen Breite in der Mittelebene von 2,50 m zu transportieren.

Zur Aufnahme der Wechselbehälter 3 weisen die Arme an ihren Enden Angriffsorgane 7 auf, die als Ketten, Haken, Seile, gabelförmige Klauen, Taschenaufnahmen etc. ausgebildet sein können. Bei der Verwendung gabelförmiger Klauen als Angriffsorgane 7 ist es sinnvoll, ein den offenen Bereich der Gabeln überbrückendes Verschlußelement aufweisen.

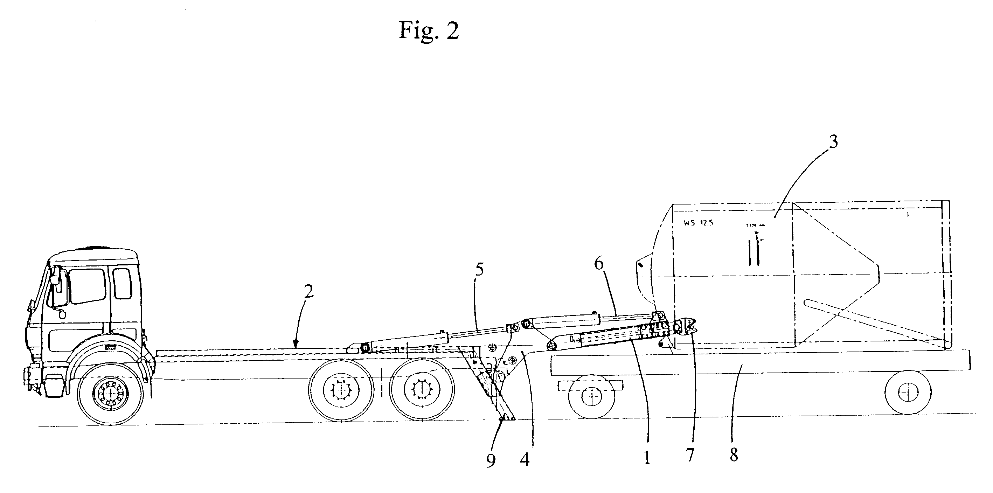

Die Arme 1 des Absetzkippers sind getrennt und synchron teleskopierbar und schwenkbar, wobei aufgrund der vorteilhaften Kinematik eine Verschwenkung um mehr als 180 °möglich ist. Hierdurch wird die in Fig. 2 dargestellte Aufnahme eines Wechselbehälters 3 von einem vorzugsweise mit Ladeschlitten ausgerüstetem Anhänger 8 ermöglicht.

Zum Abstützen des Fahrzeuges beim Aufstellen, Abladen oder Aufladen des Wechselbehälters (3) können am hinteren Ende des Fahrzeuges Stützvorrichtungen 9 vorgesehen sein.

## Patentansprüche

1. Absetzkipper, der zwei im wesentlichen parallel zueinander angeordnete, im hinteren Bereich der Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen Angriffspunkte eines Wechselbehälters erfaßbar sind, wobei zum Verschwenken der Arme jeweils ein am Fahrgestell angelenkter Hydraulikzylinder vorgesehen ist, **dadurch gekennzeichnet**, daß das andere Ende des Hydraulikzylinders (5) an einem am Fahrgestell angelenkten Trapez (4) angelenkt ist, an dem wiederum der Arm (1) verschwenkbar angelenkt ist und daß zum Verschwenken des Arms (1) ein weiterer Hydraulikzylinder (6) vorgesehen ist, der einerseits an dem Trapez (4) und andererseits an dem Arm (1) angelenkt ist.

2. Absetzkipper gemäß Anspruch 1, **dadurch gekennzeichnet**, daß jedes Angriffsorgan (7) als gabelförmige Klaue ausgebildet ist.

3. Absetzkipper gemäß Anspruch 1, **dadurch gekennzeichnet**, daß die Arme (1) in der vom hinteren Fahrzeugteil nach vorne erstreckenden Stellung unterhalb der Mittelebene eines auf der Ladefläche (2) befindlichen Wechselbehälters (3) anzuordnen sind.

4. Absetzkipper gemäß Anspruch 1, **dadurch gekennzeichnet**, daß die Arme (1) von einer etwa horizontalen Position über der Ladefläche (2) um mehr als 180 °weg in eine vom Ende der Ladefläche (2) weg nach unten geneigte Stellung verschwenkbar sind.

5. Absetzkipper gemäß Anspruch 1, **dadurch gekennzeichnet**, daß die Arme (1) des Absetzkippers synchron oder einzeln längenveränderbar und/oder schwenkbar sind.

6. Absetzkipper gemäß Anspruch 2, **dadurch gekennzeichnet**, daß die gabelförmigen Klauen im offenen Bereich ein diesen Bereich überbrückendes Verschlußelement aufweisen.

7. Absetzkipper gemäß Anspruch 1, **dadurch gekennzeichnet**, daß vorzugsweise im hinteren Bereich der Ladefläche (1) Stützvorrichtungen (9) vorgesehen sind.

8. Absetzkipper gemäß Anspruch 1, **dadurch gekennzeichnet**, daß mit den Angriffsorganen (7) der Arme (1) Angriffspunkte an einem Silo (3) erfaßbar sind.

9. Absetzkipper gemäß Anspruch 1, **dadurch gekennzeichnet**, daß das Trapez unterhalb der Ladefläche des Absetzkippers angeordnet ist.
